# FASCICULE DE BREVET EUROPEEN

(11) **EP 0 767 606 B1**
(45) Date de publication et mention de la délivrance du brevet: **23.09.1998**
(21) Numéro de dépôt: 95924374.2
(22) Date de dépôt: 28.06.1995
(51) Int. Cl.: A01K 61/00

(54) **STRUCTURE IMMERGEABLE POUR LA REPRODUCTION DES ESPECES PISCICOLES DANS TOUS LES MILIEUX AQUATIQUES**
UNTERWASSERANLAGE ZUM ZÜCHTEN VON SEETIEREN IN JEDER WÄSSRIGER UMGEBUNG
SUBMERSIBLE STRUCTURE FOR REPRODUCING FISH SPECIES IN ANY AQUATIC ENVIRONMENT

(30) Priorité: 30.06.1994 FR 9408507
(43) Date de publication de la demande: 16.04.1997
(73) Titulaire: Alvin, Jean-Pierre, 79500 Saint-Martin-les-Melle (FR); Cazin, Bernard, 69960 Corbas (FR)
(72) Inventeur: Cazin, Bernard, F-69960 Corbas (FR)
(74) Mandataire: Dupuis, François
(86) Numéro de dépôt international: FR9500857
(87) Numéro de publication internationale: WO9600500

(56) Documents cités:
- BE-A- 564 638
- US-A- 3 118 424
- US-A- 3 540 415
- PATENT ABSTRACTS OF JAPAN vol. 14 no. 314 (C-737) ,5 Juillet 1990 & JP,A,02 109929 (KATAO TAKEDA) 23 Avril 1990,

## Description

L'invention se rattache au secteur technique de la reproduction des poissons et plus particulièrement les cyprinidés qui vivent en eau douce, rivières, canaux, lacs, ballastières, et tous milieux aquatiques.

Habituellement, ce genre de poissons se reproduit naturellement sur des végétaux aquatiques immergés. La disparition de ces végétaux supérieurs dans les milieux aquatiques réduit considérablement les bio-masses de ces espèces. Cette flore aquatique abrite également une multitude de micro-organismes, de macro-invertébrés, qui servent de nourriture aux poissons.

Pour tenter de remédier à ces inconvénients, il a été proposé de construire, le long des berges de rivières, des abris aménagés pour favoriser la reproduction des poissons. Ces abris sont réalisés sous forme d'ensembles en béton ou matériau similaire qui sont également immergés et qui peuvent accessoirement servir au soutènement des berges du lit de rivière. Ce type d'abri présente, certes, un intérêt mais est d'un coût élevé, et par ailleurs ils ne sont guère transportables, limitant ainsi leurs conditions d'utilisation.

On connaît par le brevet BE-A 564638 une structure immergeable pour la reproduction des espèces piscicoles dans tous milieux aquatiques comprenant au moins un cadre profilé et aménagé pour recevoir une pluralité de faisceaux de fibres, ledit cadre recevant des moyens de lestage et des moyens de suspension flottants permettant le positionnement du ou des cadres en eau intermédiaire.

Le but recherché, selon l'invention, était donc de réaliser une nouvelle conception d'une structure favorisant la fraie des poissons, en étant d'une conception simplifiée, rapidement constructible et déplaçable au grè des besoins.

Un autre but recherché, selon l'invention, était de réaliser une structure immergeable favorisant la fraie des poissons, d'un coût de revient peu élevé et parfaitement adaptable sous forme de modules pour répondre aux besoins constatés.

Ces buts et d'autres encore ressortiront ainsi de la suite de la description.

Selon une première caractéristique le ou les cadres sont agencés pour recevoir des bandeaux profilés sur lesquels sont fixés des faisceaux de fibres, ledites fibres étant libres à l'une de leurs extremités

Pour fixer l'objet de l'invention illustré d'une manière non limitative aux figures des dessins où :

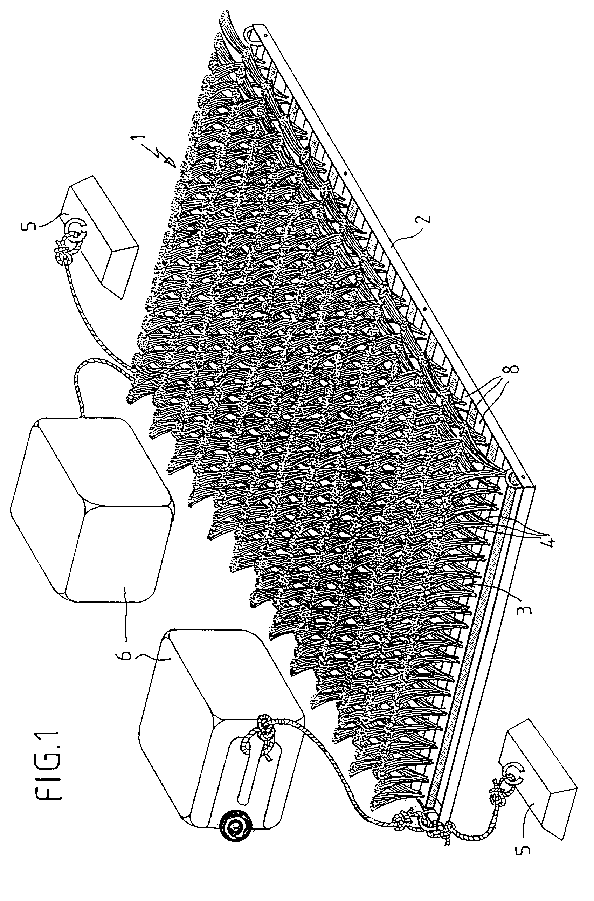

- la figure 1 est une vue en perspective d'un module d'une structure immergeable selon l'invention,

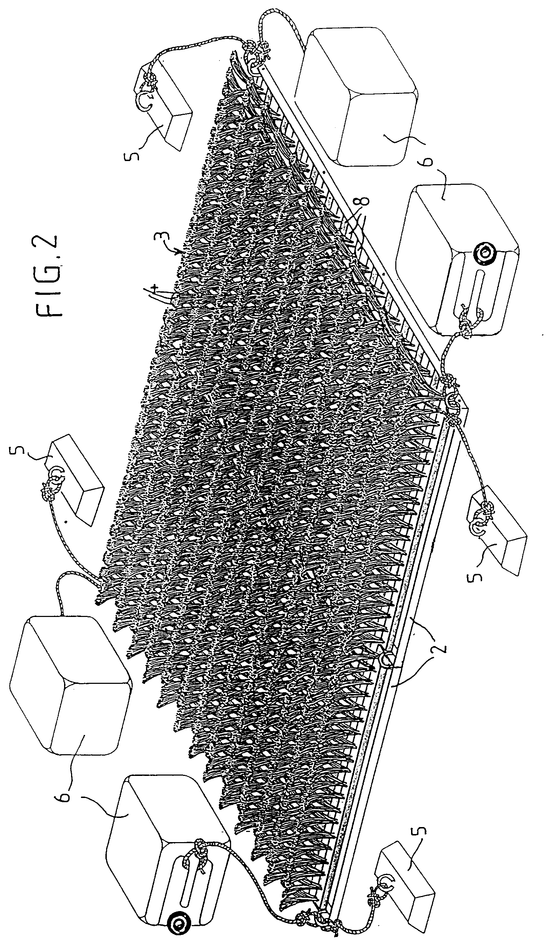

- la figure 2 est une vue en variante d'un double module, selon la figure 1,

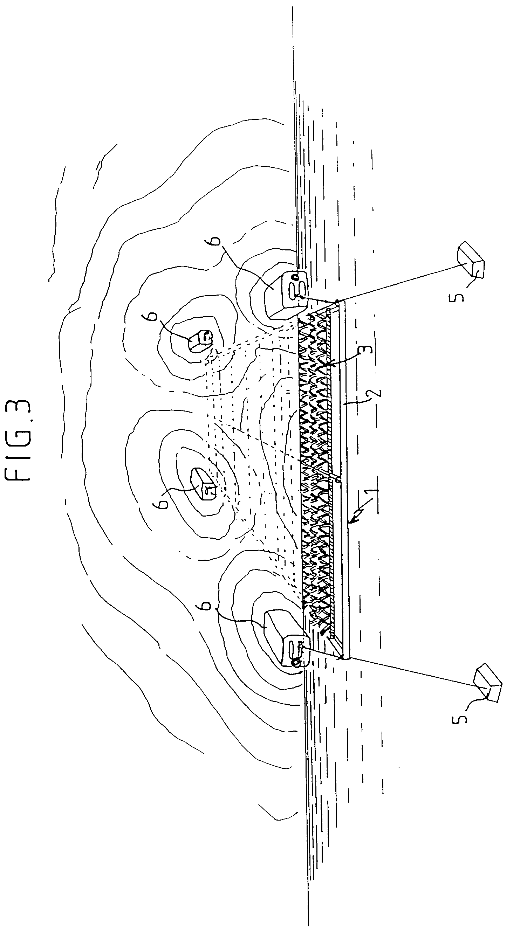

- la figure 3 est une vue à caractère schématique illustrant l'implantation d'une structure dans l'eau,

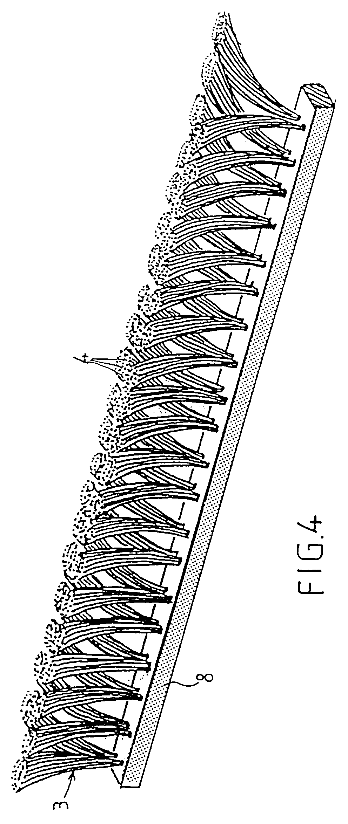

- la figure 4 est une vue d'un bandeau récepteur d'une pluralité de faisceaux de fibres permettant la reproduction des poissons,

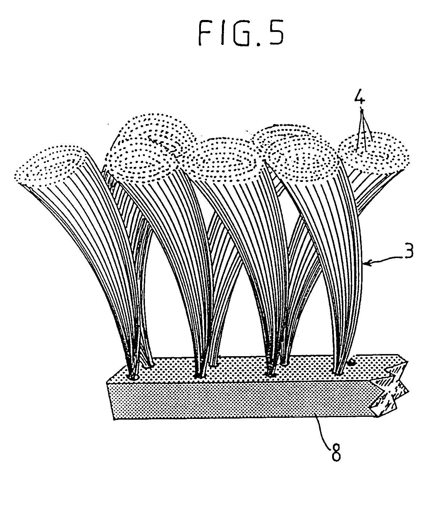

- la figure 5 est une vue à grande échelle illustrant quelques faisceaux de fibres,

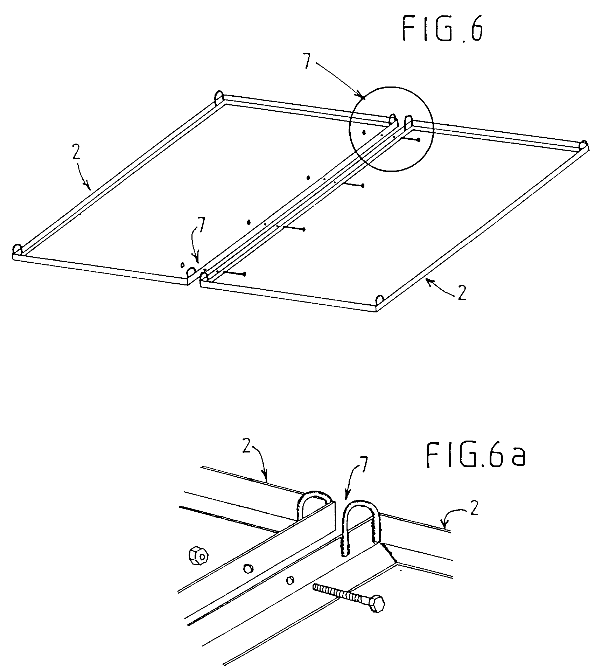

- la figure 6 est une vue partielle d'un cadre récepteur d'une pluralité de barres support de faisceaux de fibres,
- la figure 6A est une vue à grande échelle d'un détail de la figure 6.

Afin de rendre plus concret l'objet de l'invention, on le décrit maintenant d'une manière non limitative illustré aux figures des dessins.

La structure immergeable permettant et favorisant la fraie et la reproduction des poissons, et notamment des cyprinides, est référencée dans son ensemble par (1). Cette structure est immergeable en eau douce, eau de rivières, eaux courantes et eaux calmes, ou lacs, ballastières, canaux, mer, et de manière général dans tous milieux aquatiques. Elle comprend un cadre (2) profilé et aménagé pour recevoir directement d'une manière apportée une pluralité de faisceaux (3) de fibres (4) en matériau approprié, ledit cadre recevant d'une part des moyens de lestage (5) et des moyens de suspension (6) flottants permettant le positionnement du cadre en eau intermédiaire par rapport au fond du lac, de la rivière et environnement similaire.

Ce cadre (2) formant ossature est réalisé à partir, par exemple, de cornières métalliques ou autre matériau ayant subi des traitements anti-corrosion, compte tenu du milieu environnant d'utilisation. Ce cadre est établi sous forme de modules permettant une juxtaposition de plusieurs d'entre eux à l'aide de moyens d'accrochage, de liaison et de fixation (7) appropriés. Chaque cadre peut présenter une forme rectangulaire, carrée, circulaire ou autre, et reçoit, transversalement et également le cas échéant, sur sa périphérie, des bandeaux (8) profilés sur lesquels sont fixés des faisceaux de fibres réalisés de préférence en matériau synthétique. Chaque faisceau constitue un rameau pouvant être réalisé avec un très grand nombre de fibres pouvant être de l'ordre de 100 à 500 fibres par exemple, selon les besoins. Ces rameaux de fibres sont disposés par intervalles le long des bandeaux précités en étant fixés à ces derniers par tout moyen approprié de liaison et d'ancrage. Les fibres sont ainsi maintenues à leur base et sont libres à leur autre extrémité de sorte qu'en fonction des courants ou des mouvements dans le milieu aquatique, elles-sont libres de se mouvoir dans l'espace au grè de cet environnement naturel. Lesdites fibres sont en matériau synthétique, plastique à partir de fibres aramides ou autres, et d'une manière plus général, elles sont réalisées en un matériau compatible avec l'environnement aquatique. Ces fibres peuvent être naturelles. Ces fibres ne sont pas destructibles en elles-mêmes, permettant ainsi une continuité d'usage suffisante pour répondre aux besoins recherchés.

La disposition des rameaux et des fibres peut être établie de toute manière appropriée et leurs bandaux supports peuvent être réalisés en matériau plastique tel que notamment en polychlorure de vinyl ou en polypropylène. La longueur des fibres est établie d'une manière appropriée pour constituer une sorte de forêt aquatique permettant de part la multiplicité des brins et le nombre de faisceaux ou rameaux de créer une zone favorable à la reproduction des poissons. Le nombre de bandaux par cadre et le nombre de rameaux par bandaux est établi en fonction des besoins. On a représenté à titre non limitatif aux dessins des cadres de forme rectangulaire mais il peut avoir tout autre forme.

La couleur des fibres est avantageusement choisie pour s'incorporer harmonieusement avec le milieu considéré. Ces fibres peuvent être de couleur vert foncé ou tout autre.

L'intérêt de telles dispositions réside également dans le fait que les oeufs des poissons peuvent adhérer et être parfaitement maintenus entre les fibres précitées.

Les différents cadres peuvent être solidarisés les uns aux autres pour constituer des modules à l'aide d'ensembles de liaison tels que vis, écrous, ou autres, engagés dans des pattes d'accrochage appropriées.

Le choix des fibres-et-des matériaux constitutifs de la structure est établi pour répondre de manière satisfaisante aux conditions d'environnement aquatique.

Les bouées (9) et les moyens de lestage sont reliés par des cordes, chaînes ou équivalents (8) à ladite structure de base. Avantageusement, les bouées sont disposées aux angles de la structure pour permettre d'identifier visuellement la zone de pose desdites structures.

Les avantages ressortent bien de l'invention. On souligne la parfaite adaptabilité de la structure immergée, sa mobilité en position, selon les besoins, et la faculté pour tout opérateur, sans difficulté particulière, de positionner la ou les structures ainsi conçues dans tout lieu et distance par rapport au rivage. La position du ou des cadres en profondeur est établie également selon les besoins et en tenant compte de la profondeur des milieux aquatiques. Les bouées peuvent être agencées avec des signes de visualisation permettant à tous d'identifier leur position.

Selon l'invention, les faisceaux de fibres peuvent, le cas échéant, être modifiés ou remplacés. Il est possible également de rajouter des faisceaux de fibres selon les besoins en les fixant par tout moyen approprié.

Dans une variante de mise en oeuvre, on peut imaginer que de telles structures flottantes soient établies sous forme étagées à des distances respectives des différents cadres pour ne pas gêner le passage et la reproduction des poissons.

L'invention est simple à mettre en oeuvre et ses coûts de revient sont peu élevés en ne nécessitant aucun aménagement spécifique des lits des rivières et de toutes zones réceptrices de telles structures.

## Revendications

1. Structure immergeable pour la reproduction des espèces piscicoles dans tous milieux aquatiques, du type comprenant au moins un cadre (2) profilé et aménagé pour recevoir une pluralité de faisceaux (3) de libres (4), ledit cadre recevant des moyens de lestage (5) et des moyens de suspension (6) flottants permettant le positionnement du ou des cadres en eau intermédiaire,
caractérise en ce que le ou les cadres sont agencés pour recevoir des bandeaux (8) profilés sur lesquels sont fixés des faisceaux (3) de fibres (4), lesdites fibres étant libres à l'une de leurs extrémités.

2. Structure selon la revendication 1, caractérisée en ce que les libres sont réalisés en matériau plastique.

3. Structure selon la revendication 1, caractérisée en ce que les libres sont naturelles.

4. Structure selon la revendication 1, caractérisée en ce que le ou les bandeaux (8) sont réalisés en matériau plastique du type polypropylène ou similaire.

5. Structure selon la revendication 1, caractérisée en ce que les faisceaux comprennent une pluralité de fibres pouvant être de l'ordre de 100 à 500 fibres par faisceau.

6. Structure selon la revendication 1, caractérisée en ce que le ou les cadres sont constitués sous forme de modules en étant de toutes formes appropriées et solidarisés entre eux par tout moyen de fixation et de liaison (7).

7. Structure selon la revendication 1, caractérisée en ce que les moyens de suspension (6) flottant sont des bouées pouvant être disposées dans les parties d'angles de la structure.

8. Structure selon la revendication 7, caractérisée en ce que les bouées sont agencées avec des signes de visualisation et de repérage.

9. Structure selon les revendications 1 à 8 ensemble, caractérisée en ce qu'elle constitue une "forêt aquatique" permettant la fraie et la reproduction des poissons.

## Claims

1. Submersible structure for breeding fish species in any aquatic environment of the type comprising at least one frame (2) shaped and devised to accommodate a plurality of bunches (3) of fibres (4), said frame accommodating means of ballasting (5) and floating means of suspension (6) which make it possible to position the frame(s) in medium-depth water,
characterised in that the frame(s) is/are devised to accommodate shaped strips (8) to which bunches (3) of fibres (4) are fixed, one end of said fibres being unattached.

2. Structure as claimed in claim 1 characterised in that the fibres are made of a plastic material.

3. Structure as claimed in claim 1 characterised in that the fibres are natural.

4. Structure as claimed in claim 1 characterised in that the strip(s) (8) is/are made of a plastic polypropylene or similar type material.

5. Structure as claimed in claim 1 characterised in that the bunches comprise a plurality of fibres which can be of the order of 100 to 500 fibres per bunch.

6. Structure as claimed in claim 1 characterised in that the frame(s) is/are produced in the form of modules of any appropriate shape which can be physically connected to each other by any means of fixing or connecting (7).

7. Structure as claimed in claim 1 characterised in that the floating means of suspension (6) are buoys that can be placed at the corner parts of the structure.

8. Structure as claimed in claim 7 characterised in that the buoys are provided with visual indication and identification symbols.

9. Structure as claimed in claims 1 to 8 characterised in that it constitutes an "aquatic forest" allowing the spawning and reproduction of fish.

## Patentansprüche

1. Unterwasseranlage zum Züchten von Seetieren in jeder wässriger Umgebung, die aus mindestens einem Rahmen (2) besteht, dessen Profil und Ausführung das Anbringen einer Vielzahl von Strängen (3) aus Fasern (4) darauf ermöglichen, wobei der Rahmen sowohl Belastungsmittel (5) als auch schwimmfähige Aufhängungsmittel (6) besitzt, mit denen der bzw. die Rahmen im Wasser schwebend festgehalten werden können,
dadurch gekennzeichnet, daß der bzw. die Rahmen so ausgeführt sind, daß sie profilförmige Bänder (8) aufnehmen können, auf denen die Stränge (3) aus Fasern (4) angebracht sind, wobei die Fasern jeweils ein freies Ende aufweisen.

2. Unterwasseranlage nach Anspruch 1, dadurch gekennzeichnet, daß die Fasern aus Kunststoff gefertigt sind.

3. Unterwasseranlage nach Anspruch 1, dadurch gekennzeichnet, daß die Fasern Naturfasern sind.

4. Unterwasseranlage nach Anspruch 1, dadurch gekennzeichnet, daß das bzw. die Bänder (8) aus Kunststoff wie z.B. Polypropylen o.ä. gefertigt sind.

5. Unterwasseranlage nach Anspruch 1, dadurch gekennzeichnet, daß die Stränge eine Vielzahl von Fasern in der Größenordnung von 100-500 Fasern pro Strang aufweisen.

6. Unterwasseranlage nach Anspruch 1, dadurch gekennzeichnet, daß der bzw. die Rahmen in Form von Modulen gestaltet sind, die jede beliebige zweckmäßige Form haben können und mit beliebigen Befestigungs- bzw. Verbindungsmitteln (7) fest miteinander verbunden sind.

7. Unterwasseranlage nach Anspruch 1, dadurch gekennzeichnet, daß die schwimmfähigen Aufhängungsmittel (6) Bojen sind, die in den Eckbereichen der Anlage angebracht werden können.

8. Unterwasseranlage nach Anspruch 7, dadurch gekennzeichnet, daß die Bojen mit Mitteln zur optischen Anzeige und Kennzeichnung versehen sind.

9. Unterwasseranlage nach Anspruch 1 bis 8, dadurch gekennzeichnet, daß sie einen "Unterwasserwald" bildet, in dem das Laichen bzw. die Fischzucht begünstigt wird.
